# EUROPEAN PATENT APPLICATION

(11) **EP 1 521 030 A1**
(43) Date of publication of application: **06.04.2005**
(21) Application number: 04022905.6
(22) Date of filing: 25.09.2004
(51) Int. Cl.: F16L 59/02, H05B 3/36

(54) **Heat insulating construction for piping and heat insulating tool kit**

(30) Priority: 30.09.2003 JP 2003339079
(71) Applicant: NICHIAS CORPORATION, Tokyo (JP)
(72) Inventor: Kobayashi, Tsuyoshi, 1-8-1, Shinmiyakoda Hamamatsu-shi (JP); Fukuda, Keiichi, 1-8-1, Shinmiyakoda Hamamatsu-shi (JP); Motoyoshi, Yoshiyuki, 1-8-1, Shinmiyakoda Hamamatsu-shi (JP)
(74) Representative: Luderschmidt, Schüler & Partner

(57) **Abstract**

There are provided a heat insulating tool kit for piping and a heat insulating construction (10) using the heat insulating tool kit.

The heat insulating tool kit includes a piping (11); a band-shaped heat insulating unit (12) which includes at least a heat insulating material (20) and preferably a heating element (17) and is wrapped with a heat-resistant resin film (22); a support cover (14) consisting of a tubular element of a C-shaped cross section having a slit-shaped opening (27) over the total length in the axial direction of the tubular element; and preferably an external cover (15) of almost the same shape as that of the support cover (14).

## Description

### BACKGROUND OF THE INVENTION

### Field of the Invention

The present invention relates to a heat insulating construction for piping and a heat insulating tool kit. More particularly, it relates to a heat insulating tool kit for piping, which can easily be attached to and detached from the piping in a limited space repeatedly and fixed in a stable form, can be attached so that a heating surface is in close contact with the outer peripheral surface of piping so that heat is conducted efficiently, which results in no overheating of heated portion, can be subjected to temperature control stably, and can be used in a clean room etc. because dust particles scarcely occur, and a heat insulating construction using the heat insulating tool kit.

### Description of the Related Art

Conventionally, in a manufacturing plant for semiconductors, liquid crystals, electronic components, etc., a reaction gas and a processing solution have been used in processes such as a conveying process, etching process, and cleaning process. Piping for transporting the reaction gas and the processing solution has a heat insulating construction according to the service conditions. In the processing site, innumerable pipes are installed so as to be close to each other. Further, since articles to be processed are precision components, the processing site is a clean room the interior of which is required to have a high degree of cleanness.

As a heater capable of being used for heat insulation and heating of piping etc. for transporting the above-described reaction gas and processing solution, for example, Japanese Patent Laid-Open No. 2002-250498 has disclosed heat insulated transfer piping in which a heating element such as a cord heater is brought into contact with the periphery of resin or metal made transfer pipe, a soaking layer consisting of a laminated element of aluminum foil and glass fabric sheet is put at the outer periphery of the heating element, a heat insulating layer formed by wrapping a glass tape with a thin thermoplastic resin sheet and a moistureproof layer consisting of polyester tape are wound around the outer periphery of the soaking layer in a spiral form, and the outermost portion is coated with a vinyl chloride resin made cylindrical pipe. Such a heat insulated transfer piping can be used in an environment requiring a high degree of cleanness, such as a clean room, because the scattering of glass fibers contained in the heat insulating layer is restrained. However, many kinds of members used in an installation site must be handled in the mounting site, and the heat insulating construction is a multilayer one. Furthermore, the mounting work is troublesome because the heat insulating layer and the moistureproof layer must be wound in a spiral form. Especially in a place where piping is entangled, it may be difficult to install the heat insulating construction (refer to Patent Document 1).

Also, for example, Japanese Patent Laid-Open No. 8-93989 has disclosed a heat insulating tube in which a cut penetrating from the outer peripheral surface to the inner peripheral surface is provided along the axial direction in a soft heat insulating tubular element consisting of a resin foam, the outer peripheral surface thereof is covered with a soft synthetic resin sheet, and a tongue element, which is connected to both ends of the synthetic resin sheet and the internal surface of which is coated with a gluing agent, is extendingly provided. According to the description in this Publication, when the heat insulating tube is used, the tubular element is fit on a pipe to be heat insulated by expanding the cut in the tubular element, and after one tongue element of synthetic resin sheet has been affixed temporarily to the outside wall of the pipe to be heat insulated, the other tongue element is affixed to the external surface of the synthetic resin sheet so as to cover the cut. According to this heat insulating tube, it can be expected to enhance the workability of mounting work to the piping. However, this heat insulating tube has no heating function, so that the pipe to be heat insulated cannot be controlled to a predetermined temperature range. Further, since the heat insulating tube is fixed with the gluing agent, when the heat insulating tube must be removed for maintenance of piping, there is a fear of damaging the tongue element. Still further, when the heat insulating tube is used repeatedly, it is necessary to apply the gluing agent again, which is troublesome. Therefore, this heat insulating tube is unsuited to reuse (refer to Patent Document 2).
[Patent Document 1] Japanese Patent Laid-Open No. 2002-250498
[Patent Document 2] Japanese Patent Laid-Open No. 8-93989

### SUMMARY OF THE INVENTION

The present invention has been made to solve the above problems, and accordingly an object thereof is to provide a heat insulating tool kit for piping, which can easily be attached to and detached from the piping in a limited space repeatedly and fixed in a stable form, can be used in a clean room etc. because dust particles scarcely occur, can be attached so that a heating surface is in close contact with the outer peripheral surface of piping so that heat is conducted efficiently. which results in no overheating of heated portion, and can be subjected to temperature control stably, and a heat insulating construction using the heat insulating tool kit.

The gist of a first invention relates to a heat insulating construction for piping, including a piping; a band-shaped heat insulating unit layer in which at least a heat insulating material layer is wrapped with a heat-resistant resin film and is wound in the width direction at the outer periphery of the piping; and a support cover layer which is a tubular element of a C-shaped cross section having a slit-shaped opening over the total length in the axial direction of the tubular element and covers the heat insulating unit layer from the outside.

The gist of a second invention relates to a heat insulating tool kit including a band-shaped heat insulating unit in which at least a heat insulating material layer is wrapped with a heat-resistant resin film and is wound in the width direction at the outer periphery of the piping; and a support cover which is a tubular element of a C-shaped cross section having a slit-shaped opening over the total length in the axial direction of the tubular element and covers the heat insulating unit from the outside.

All elements forming the heat insulating construction for piping of the first invention and the heat insulating tool kit of the second invention are common, so that hereunder explanation is given mainly of the heat insulating construction for piping, and the explanation necessary for the heat insulating tool kit is added appropriately as necessary. The piping is not subject to any special restriction. For example, the piping is one for carrying fluids such as liquid and gas. In particular, the present invention is applied usefully to piping in the case where liquid, gas, etc. that are used for precision equipment and apparatus used in a clean environment must be heated or heat insulated.

A heat insulating portion of the heat insulating unit forming the above-described heat insulating unit layer has a band shape, and is formed by wrapping a heat-resistant, flexible, and heat insulating band-shaped heat insulating layer with a heat-resistant resin sheet. As a heat insulating material forming such a heat insulating layer, fluorocarbon resin and aramid resin such as PTFE, PET, FEP, PCTFE, ETFE, ECTFE, and PVdF, a heat-resistant organic material such as polyamide, polyimide, polycarbonate, polyacetal, polybutylene terephthalate, modified polyphenylene ether, polyphenylene sulfide, polysulfone, polyethersulfone, polyarylate, and polyether etherketon, and a woven fabric of fibers or a nonwoven fabric (felt) formed of an inorganic material such as glass, ceramics, silica, and alumina can be cited. Further, in the case where the material is highly flexible, a sheet that is a continuous element thereof can also be used. Among these, an appropriate material is selected according to the heat insulating temperature or heating temperature of piping and is used. Also, two or more kinds of the above-described materials can be blended or laminated for the use.

The thickness of the aforementioned heat insulating layer is usually about 0.5 to 5 mm. The width of the heat insulating portion is such as to substantially cover the outer periphery of the piping, and it is preferable that both ends thereof butt against each other on the outer peripheral surface of piping. Also, the length of the heat insulating portion is appropriately adjusted depending on the length of piping. When the piping is long, the heat insulating unit is manufactured as a regular size of, for example, about 30 to 100 cm for ease of handling.

In the heat insulating unit, a heat generating element portion can be arranged. The heat generating element is not subject to any special restriction. For example, a heat generating element that generates heat by energization can suitably be used. As the shape of this heat generating element, any of a wire shape, sheet shape, and net shape can be used. Among these, a nichrome wire of a wire shape can suitably be used as a general-purpose heat generating element. The electric power consumption of the heat generating element is appropriately set depending on the piping to which the heat insulating construction or heat insulating tool kit in accordance with the present invention is applied and the heating and heat insulating temperature thereof, usually being set at 10 to 500 watts (W).

The outer peripheral surface of the heat generating element is preferably coveredwith a protective material having electrical insulation performance. As such an insulator, for example, a silica sleeve or cloth, an alumina sleeve or cloth, a glass sleeve or glass cloth, and the like can be cited. Among these, the silica sleeve can be used safely and generally. Also, since the heat insulating unit is used so as to be wound on the outer peripheral surface of piping in the width direction, in the case where the heat generating element is a wire-shaped heater, in principle, theheatgeneratingelementispreferably arranged in a zigzag form in the lengthwise direction of heat insulating unit to reduce bending in the width direction. The heat generating element is preferably fixed in the heat insulating unit, and the fixing location can be, for example, on the surface on the piping outer peripheral surface side of the aforementioned heat insulating material. However, a band-shaped base material for fixation can separately be laminated on the side of facing to piping outer peripheral surface of the heat insulating material, and the heat generating element can be fixed on the surface on the piping outer peripheral surface side of the band-shaped base material.

The band-shaped base material is formed of a material preferably having high heat insulating properties in addition to heat resistance and flexibility. As such a material, a flexible continuous element sheet, woven fabric of fibers, or nonwoven fabric formed of an inorganic material such as glass, ceramics, and silica, fluorocarbon resin and aramid resin such as PTFE, PET, FEP, PCTFE, ETFE, ECTFE, and PVdF, and a heat-resistant organic material such as polyamide, polyimide, polycarbonate, polyacetal, polybutylene terephthalate, modified polyphenylene ether, polyphenylene sulfide, polysulfone, polyethersulfone, polyarylate, and polyether etherketon can be cited. An appropriate material is selected according to the heat insulating temperature or heating temperature of piping and is used. Further, these materials can be used by being mixed or by being laminated in layers. Among these materials, a glass fiber woven fabric is suitably used because of its high heat resistance and ease of handling.

The method for fixing the heat generating element on the heat insulating material or band-shaped base material is not subject to any special restriction. A method in which an electrical heater wire is fixed to a band-shaped base material portion by being windingly sewed with a thin heat resistant fabric or thread such as glass yarn, silica yarn, alumina yarn, and those coated with fluorocarbon resin, a method in which an electrical heater wire portion is adhered onto the heat insulating material or the surface of band-shaped base material by being pressed with a net-shaped sheet, and a method in which an electrical heater wire itself is sewn onto the heat insulating material or the band-shaped base material with a sewing machine can be cited. From the viewpoint of heat conduction, a method in which the material used for fixture does not cover the heat generating element to the utmost is preferable.

In the case where the heat generating element is arranged in the heat insulating unit, it is preferable that the surface on the side on which the heat generating element fixed to the band-shaped base material is arranged (heating-side surface) be covered with a sheet material having high heat conductivity, i.e., a sheet-shaped soaking material. The heat generated by the heat generating element is distributed uniformly by the covering with the sheet-shaped soaking material having high heat conductivity, and hence the piping surface can be heated more uniformly. The sheet-shaped soaking material may be arranged only on the surface on the heat generating element arrangement side, or may be arranged so as to wrap the whole including the heat generating element and the band-shaped base material for supporting the heat generating element. In this case, it is preferable that the heat insulating material be not arranged in the wrapping layer using the soaking material, but be arranged between the soaking material layer on the non-heating surface and the wrapping material layer.

The sheet-shaped soaking material having high heat conductivity is not subject to any special restriction. Usually, a metal foil of copper, aluminum, etc. is used. Among these, an aluminum foil is used practically. The thickness of this metal foil is not subject to any special restriction. Usually, the thickness thereof is about 0.015 to 1 mm. If the thickness is too large, the flexibility at the time of winding of piping heater as a product decreases. When the metal foil is thin, two or three or more foils can be used by being lapped in a scope in which the flexibility is not hindered. Also, to prevent the metal foil from breaking, the metal foil can be reinforced as necessary by a laminar construction formed by a heat-resistant film. In this case, from the viewpoint of heat conduction, the heat-resistant film is preferably as thin as possible.

In the present invention, a temperature detecting probe can be provided at one or more places in the heat insulating unit. Preferably, the temperature detecting probe is arranged between the soaking material layer and the wrapping material layer when the soaking material is used. The temperature detecting probe is not subject to any special restriction. Usually, a thermocouple can be used practically. When the heat insulating unit is manufactured by assembling the elements of the heat insulating material, band-shaped base material, heat generating element, temperature detecting probe, etc., the temperature detecting probe is preferably fixed so as not to move in the heat insulating unit. The fixing position and fixing method of the temperature detecting probe are not subject to any special restriction. For example, in the case where the soaking material layer is not provided, like the heat generating element, the temperature detecting probe is arranged on the surface of band-shaped base material, and can be fixed by the method of being windingly sewn. In the case where the soaking material layer is provided, the temperature detecting probe is preferably arranged between the soaking material layer and the wrapping material layer, and can be fixed by the method of being windingly sewn to the band-shaped base material by penetrating the soaking material layer. When the outlet of power supply line for supplying electric power to the heat generating element is sealed, the lead wire of temperature detecting probe is also pulled out of the outlet. A terminal connectable to a temperature controller is preferably provided at the tip end of the lead wire.

In the present invention, a bimetal temperature switch and/or a temperature fuse can be arranged at one or more places in place of or in addition to the temperature detecting probe. In this case, the bimetal temperature switch is set in advance so as to be opened and closed at a temperature to be controlled, and the arrangement location and fixing method thereof can substantially be made the same as in the case of the temperature detecting probe. Also, as the temperature fuse, a fuse that operates in response to the upper limit of overheating is used, and is connected in series to the power supply line for supplying electric power to the heat generating element. As the arrangement location, a location capable of being changed easily is preferable. For example, a location near the outlet of power supply line is preferable, and the location may be on the outside of the wrapping material layer. The fixing method is not subject to any special restriction, and any publicly known method can be used.

The heat resistant resin sheet as the aforementioned wrapping material is a material for wrapping the heat insulating layer, band-shaped base material, heat generating element, soaking material, thermocouple, bimetal temperature switch, temperature fuse, etc. as a whole. As such a heat-resistant resin sheet, fluorocarbon resin such as PTFE and PFA, modified fluorocarbon resin, silicone, one kind of modified silicone, and a combination of any of these materials can be cited. Among these, a PTFE resin sheet or a PFA resin sheet is suitably used because dust particles scarcely occur. The thickness of the heat-resistant resin sheet is usually about 0.05 to 1 mm, preferably about 0.1 to 0.5 mm, and two or more sheets can be used by being lapped as necessary. The width and length thereof are determined appropriately so as to be a size such as to be capable of wrapping the whole of the heat insulating material,heating element,described later, band-shaped base material, sheet-shaped soaking material, temperature detecting thermocouple probe, etc. In the case where an ear portion of heat insulating unit is used as an extension of the wrapping material as described later, a wider material can be used.

The method for wrapping with the heat-resistant resin sheet, which is the wrapping material, can be a method of direct bonding due to thermal fusion when the material thereof is thermal fusing one. However, when the material is not thermal fusing, wrapping can be performed by interposing a thermal bonding resin layer beforehand in a portion to be bonded and by bonding due to heating and fusion. For such thermal fusion, a heat sealer or a heat press can be used. As the thermal bonding resin, a PFA resin film can be cited when the heat-resistant resin sheet is fluorocarbon resin.

At the time of wrapping, the outlets of the power supply line and the lead wire of temperature detecting probe are preferably provided with reinforcing means so as to provide a strength such that the pulled-out line can be fixed and is not destroyed easily. As such reinforcing means, a publicly known construction can be applied. The sealing may be performed by thermal fusion of upper and lower sheets of wrapping material layer, or may be performed by packing a curable sealing material around the power supply line and thermocouple lead wire between the upper and lower sheets and thereafter by curing it. As such a sealing material, for example, PFA, silicone rubber, epoxy resin, and urethane resin can be cited. Among these, silicone rubber is suitably used because dust particles scarcely occur after curing.

At the time of wrapping, the ear portions extending in the width direction are preferably formed at both edges in the width direction of heat insulating unit. When this ear portion is formed, when the heat insulating unit is covered with the later-described support cover, the ear portion is arranged in a state of projecting to the outside of edge forming the slit-shaped opening. By folding the ear portion to the outer peripheral surface side of support cover, the position thereof is stabilized, so that the piping can easily be housed in a concave curved surface formed by the heat insulating unit. Further, when the later-described external cover is used, the ear portion is held between the support cover and the inside surface of the external cover, and thus the position of heat insulating unit is stabilized and fixed. The material forming such ear portion is not subject to any special restriction. However, it is practical to form the ear portion by only the heat resistant resin sheet layer that is an extension of the wrapping material. The ear portion may be formed of two wrapping materials, upper and lower, or may be formed of either one of the wrapping materials. The extension length of ear portion is determined appropriately depending on the diameter of piping to be heat insulated, usually being about 5 to 20 mm.

The support cover is a tubular element of a C-shaped cross section having a slit-shaped opening over the total length in the axial direction of the tubular element as a whole, and a cover for covering the heat insulating unit wound around the piping by forcedly widening a portion between the edges which form the slit-shaped opening. Preferably, the inside diameter of the tubular element is slightly smaller than the outside diameter of the heat insulating unit wound on the piping, and is such that the inside surface of support cover is pressingly in contact with the outer peripheral surface of heat insulating unit when a portion of heat insulating unit wound on the piping is covered by forcedly widening the slit-shaped opening formed as described below.

The slit width of the opening of support cover is not subject to any special restriction. The slit width may be such as to be capable of covering the piping through the opening by forcedly widening the opening by elasticity. Concretely, when a part of the outer peripheral surface of a tubular element formed of an elastic material, for example, a PFA made tubular element is cut into a slit form over the total length in the axial direction of the tubular element, the gap of the obtained slit-shaped opening of the tubular element tends to be slightly narrower than the cut width. In the present invention, it is preferable that the slit gap in a stand-alone state after cutting be almost equal to or slightly smaller than the diameter of piping to be installed. Concretely, the actually cut width is determined appropriately depending on the thickness, outside diameter, and material of the support cover.

As described above, for the support cover provided with the slit-shaped opening over the total length in the axial direction of the tubular element, the edge forming the opening is at right angles to the terminal end portion cut surface (tube end corner portion) of tubular element. However, it is preferable that the slit width at the tube end be wider than the silt width in the tube central portion to facilitate the covering of the piping and the heat insulating unit wound on the piping with the support cover. The cut line may be a straight line or may be a curved line. It is practical that the width of slit portion in the tube endportion is , for example, almost equal to or slightly narrower than the outside diameter of the wound heat insulating unit.

As the material forming the support cover, heat-resistant resins or metals can be cited, and ones further having elasticity are preferable. For example, one kind or a combination of two or more kinds of fluorocarbon resin such as PTFE and PFA, modified fluorocarbon resin, silicone, modified silicone, and alloys of aluminum, stainless steel, etc. can be cited. The thickness of tubular element forming the support cover is usually 0. 5 to 5 mm depending on the kind and elasticity of material.

The external cover can have the same construction as that of the support cover. When the external cover and the support cover each are formed of an elastic element, the inside and outside diameters of tube as a material can be equal to those of the support cover. However, considering the constructional relationship of the external cover covering the support cover, the inside diameter of external cover can be set almost equal to the outside diameter of support cover. The length of external cover is preferably not so long because of ease of handling. The length of a single external cover should preferably be a regular size of about 15 to 30 cm. In this case, a plurality of external covers are assembled as an element forming the heat insulating tool kit, and the total length thereof is caused to coincide with the length of the whole of the heat insulating unit.

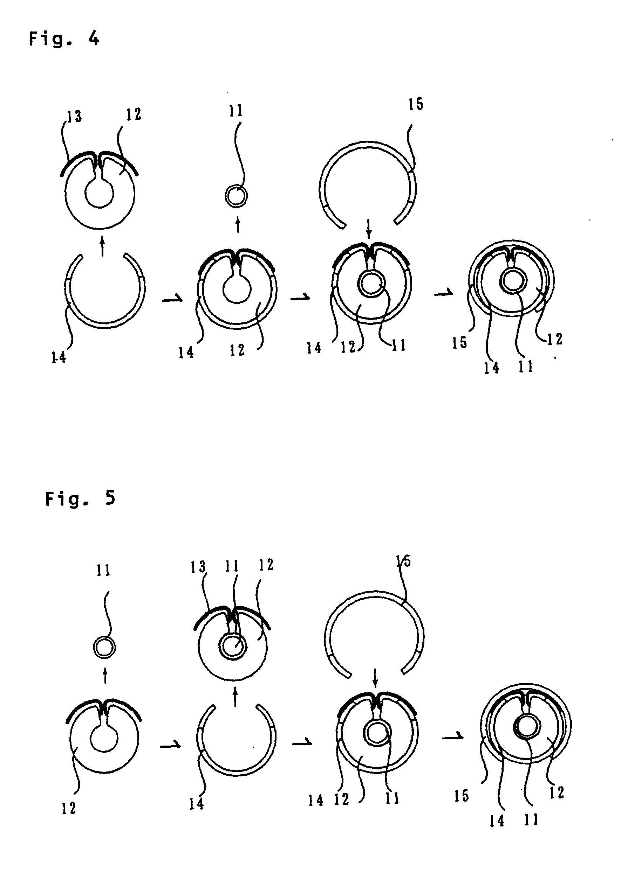

The heat insulating tool kit in accordance with the present invention is formed by the heat insulating unit, the support cover, and preferably further the external cover. The method for forming the heat insulating construction in accordance with the present invention using the above-described heat insulating tool kit is not subject to any special restriction. For example, as shown in FIG. 4, first, the heat insulating unit is arranged and housed in the tubular element of support cover while forcedly widening the opening of support cover so that a concave curved surface space is formed on the heating surface side in such a manner that the non-heating surface of heat insulating unit faces to the inner peripheral surface of support cover, and a butting portion at both ends in the width direction of the heat insulating portion of heat insulating unit can be seen from the slit-shaped opening of support cover. Next, in a state in which the ear portions at both ends of the heat insulating portion are pulled out of the slit-shaped opening, the ear portions are folded to the outer peripheral surface side. Next, in a state in which the butting portion that can be seen from the slit-shaped opening is forcedly widened, the gap is pressed on the piping to be heat insulated, and thus the piping is housed in the concave curved surface space and the tubular element is mounted, by which the heat insulating unit is closely adhered to and wound on the piping. At the time of this mounting operation, by a mechanism in which the folded portions of the ear portions are hooked by both edges of the slit-shaped opening of support cover, the arrangement of heat insulating unit in the support cover is fixed, and thus the mounting operation is performed smoothly.

Another method for forming the heat insulating construction, as shown in FIG. 5, can also be used. In this method, first, the heat insulating unit is brought into close contact with and wound on the piping in the width direction, and the wound portion is covered with the support cover from the side opposite to the butting portion by forcedly widening the slit-shaped opening of support cover, preferably by pressing the opening portion having a wider width at the tube end on the outer peripheral surface.

In both of the above-described two methods, when the external cover is additionally used as a kit, the slit-shaped opening of external cover is pressed on the slit-shaped opening of the mounted support cover especially from a portion where the opening width is widened by cutting the tube end corner portion, and the external cover is preferably mounted to cover the outer peripheral surface of support cover by the same procedure as that of the support cover so that the butting portion is not exposed.

The present invention provides an adiabatically heat insulating or heating heat insulating construction and a kit of elements used to form the construction. When the above-described construction is formed, since the adhesion of the heating surface of heat insulating unit to the piping is good, the heat conductivity is high, and the heat insulating unit does not overheat. Further, the folding of ear portions of heat insulating unit and the cut of tube end corner portion of at least one of both covers facilitate repeated attachment and detachment. Therefore, the maintenance of piping and heat insulating unit can be performed simply and easily. Further, dust particles are not scattered at the time of attachment/detachment of heat insulating unit, which achieves a great industrial effect.

### BRIEF DESCRIPTION OF THE DRAWINGS

FIG. 1 is an explanatory sectional view of a heat insulating construction;
FIG. 2 is an explanatory view of an example of internal configuration of a heat insulating unit;
FIG. 3 is an explanatory view of a cut shape in a support cover and an external cover;
FIG. 4 is an explanatory view of an example of a procedure for mounting a heat insulating tool kit on piping and for forming a heat insulating construction; and
FIG. 5 is an explanatory view of another example of a procedure for mounting a heat insulating tool kit on piping and for forming a heat insulating construction.

### [Description of reference numerals]

- 10 ...: heat insulating construction
- 11 ...: piping
- 12 ...: heat insulating unit (heat insulating portion)
- 13 ...: ear portion of heat insulating unit
- 14 ...: support cover
- 15 ...: external cover
- 16 ...: band-shaped base material (glass fiber tape)
- 17 ...: nichrome wire heat insulating unit
- 18 ...: nichrome wire fixing sewing thread (glass yarn)
- 19 ...: soaking material (aluminum foil)
- 20 ...: back surface heat insulating material
- 21 ...: thermocouple
- 22 ...: covering material
- 23 ...: external power supply line
- 24 ...: external power supply line outlet
- 25 ...: appearance of support cover and external cover
- 26 ...: outer peripheral surface of support cover and external cover
- 27 ...: slit-shaped opening cut portion
- 28 ...: cut portion of tube end corner portion

### DETAILED DESCRIPTION OF THE PREFERRED EMBODIMENTS

An embodiment of the present invention will be described now in detail with reference to the accompanying drawings.

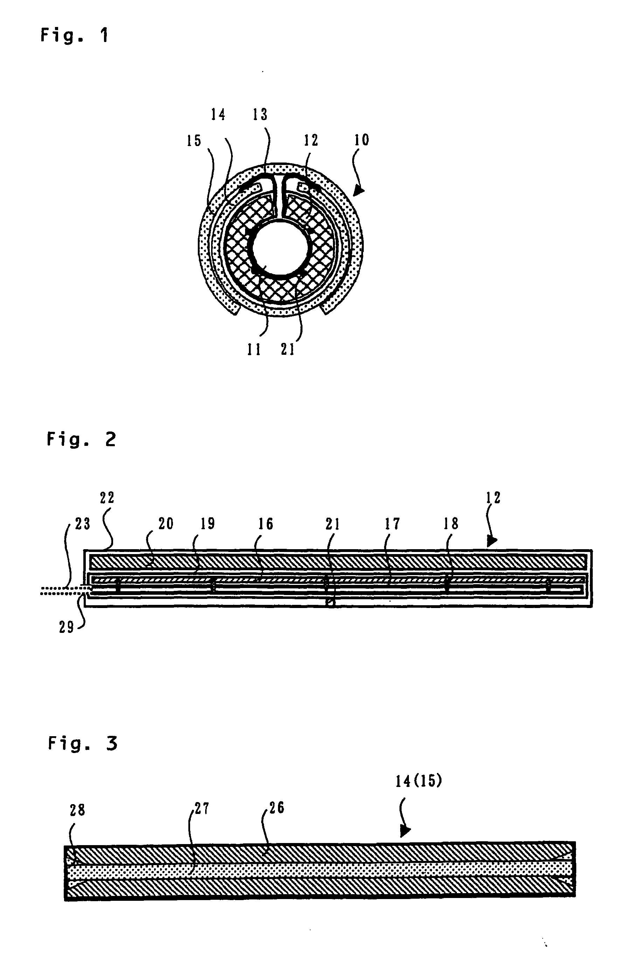

FIG. 1 is an explanatory sectional view of a heat insulating construction in which a heat insulating tool kit in accordance with the present invention including a heat insulating unit, a support cover, and an external cover is mounted on piping. FIG. 2 is an explanatory view of an example of internal configuration of a heat insulating unit. FIG. 3 is an explanatory view of a cut shape in a pipe end corner portion of a slit-shaped opening in a support cover and an external cover. FIG. 4 is an explanatory view of a procedure for mounting a heat insulating tool kit in accordance with the present invention and a heat insulating unit, a support cover, and an external cover, which are components of heat insulating construction, on piping. FIG. 5 is an explanatory view of another procedure for mounting a heat insulating tool kit in accordance with the present invention and a heat insulating unit, a support cover, and an external cover, which are components of heat insulating construction, on piping.

In this embodiment, a piping 11 to be heated was a stainless steel made piping portion having an outside diameter of 6.35 mm and a length of 30 cm. A heat insulating tool kit suitable for this piping portion was prepared, and one example of a heat insulating construction 10 was formed. As a band-shaped base material 16, a glass fiber tape 16 of 1.5 mm thick, 20 mm wide, and 296 mm long was used. On the heating-side surface thereof, a silica sleeve insulated nichrome wire (NCH-2, manufactured by Nippon Metal Industry Co., Ltd.) 17 of 100 watts with a length of 1200 mm was arranged four times in a zigzag form in parallel with the lengthwise direction of the glass fiber tape 16, and windingly sewn to the glass fiber tape 16 with a glass yarn 18 at intervals of 50 mm along the length of the nichrome wire 17. Both ends of the nichrome wire 17 were connected to an external power supply line 23 which was provided with a male plug at the terminal end thereof and was insulation coated.

The whole excluding the external power supply line 23 was wrapped doubly with an aluminum foil 19, which was a soaking material 19, with a thickness of 0.1 mm, and a thermocouple joint portion 21 of a K thermocouple of 0.32 mm in diameter was arranged on the outside of this wrapping element in a central portion on the heating surface side in which the nichrome wire 17 was arranged so that the tip end of an insulated lead wire (not shown) thereof aligned with an outlet 24 of the nichrome wire 17. The lead wire was fixed to the glass fiber tape 16 by being windingly sewn with a glass yarn as in the case of the nichrome wire so as to penetrate the aluminum foil layer 19. Also, on the back surface of the heating surface, a PTFE porous sheet 20 of 3 mm thick, 20 mm wide, and 296 mm long was lapped as a back surface heat insulating layer 20.

The whole was arranged in the central portion between two PTFE film 22 each having a thickness of 0.1 mm, a width of 36 mm, and a length of 300 mm, which was a covering material 22, and a PFA film of 0.1 mm thick was held, as a fusing material, in a portion each 8mm from both end sides in the width direction of the position and each 2 mm from both ends in the lengthwise direction of the band-shaped base material 16, by which the whole was pressed from the upside and downside by a heat plate heated to 360°C. Consequently, a heat insulating unit 12 was obtained which had a heat insulating portion of about 5 mm thick which was provided with an ear portion 13 of 8 mm thick in each of both side edge portions in the width direction.

The outer peripheral surface of a PFA resin made tube having an inside diameter of 20 mm, an outside diameter of 23 mm (wall thickness of 1.5 mm), and a length of 300 mm was cut in a slit form along the lengthwise direction, by which a tube having an inside diameter of 16 mm, an outside diameter of 19 mm (wall thickness of 1.5 mm) , and an opening width 27 of 5 mm in a stand-alone state was obtained. Next, as shown in FIG. 3, both tube end corner portions in the lengthwise direction were cut into a triangular portion 28 of 10 mm in the lengthwise direction and 5 mm in the circumferential direction at the terminal end to form a wide opening width of 15 mm. The corner of the cut surface in the edge portion was ground so as to be smooth. Thereby, a support cover 14 was obtained. Also, separately, two external covers 15 was manufactured in the same way as in the case of the support cover 14 except that the length was 150 mm. The external cover 15 had an opening width of an opening 32 of 5mm and an opening width of the tube end corner portion 28 of 15 mm in a stand-alone state. Consequently, a heat insulating tool kit consisting of one heat insulating unit 12, one support cover 14, and two external covers 15 was obtained.

Following the mounting procedure shown in FIG. 4, the heat insulating unit 12 was first housed in the tubular element of the support cover 14 while forcedly widening the opening 27 of the support cover 14. At this time, the arrangement was adjusted so that the non-heating surface of the heat insulating unit 12 came into contact with the inner peripheral surface of the support cover 14, and the butting portion at both ends in the width direction of the heat insulating portion 12 of the heat insulating unit 12 could be seen from the slit-shaped opening 27 of the support cover 14. Also, adjustment was made so that the ear portions 13 at both ends of the heat insulating portion were pulled out of the slit-shaped opening 27, and each of the ear portions 13 was folded to the outer peripheral surface side of the support cover 14. Next, the butting portion that can be seen from the slit-shaped opening 27 was forcedly widened, and in this state, the gap was pressed on a 300 mm-long portion of the piping 11 having an outside diameter of 6.35 mm, by which the piping was mounted with the tubular element of the support cover 14. At the time of this mounting operation, by a mechanism in which the folded portions of the ear portions 13 were hooked by both edges of the slit-shaped opening 27 of the support cover 14, the mounting operation was performed smoothly without displacement of the heat insulating unit 12 within the support cover 14. Further, the ear portions 13 were held between the edges of the slit-shaped opening 27 and the inner peripheral surface of the external cover 15, and thus the heat insulating unit 12 was fixed stably.

Next, the opening 27 of one external cover 15 was directed to a portion in which the butting portion of both edge portions of the heat insulating unit 12 lapped on the slit-shaped opening 27 of the support cover 14, and the external cover 15 was mounted on the support cover 14 that covered the winding portion of the heat insulating unit 12 by the same procedure as that in the case of the support cover 14, by which the heat insulating unit 12 was mounted on the surface of the piping 11 in a compact form. This external cover 15 was shifted to the one end side in the lengthwise of the support cover 14 direction, and the remaining external cover 15 was mounted in a portion where the external cover 15 was not mounded. Thereby, the piping 11 and the outer peripheral surface of the heat insulating unit 12 were wholly covered by the support cover 14 and the external cover 15, so that the heat insulating construction 10 in accordance with the present invention was formed.

In the above-described heat insulating construction 10, the ear portions 13 of the heat insulating unit 12, which projected from the slit-shaped opening 27 of the support cover 14, were held between the outer peripheral surface of the support cover 14 and the inside surface of the external cover 15, so that the heat insulating unit 12 was fixed in a stable form, and the heating surface of the heat insulating unit 12 was pressed on the outer peripheral surface of the piping 11 by a pressing force from the inner peripheral surface of the support cover 14 and the outer peripheral surface side of the external cover 15. When the external power supply line 23 of the mounted heat insulating unit 12 was energized by connecting the lead wire of the thermocouple 21 to a temperature controller, the heat generated from the nichrome wire 17 of the heat insulating unit 12 was conducted efficiently to the outer peripheral surface of the pressed piping 11, so that the temperature control was able to be carried out stably without overheating of the heat insulating unit 12.

## Claims

1. A heat insulating construction for piping, comprising a piping; a band-shaped heat insulating unit layer in which at least a heat insulating material layer is wrapped with a heat-resistant resin film and is wound in the width direction at the outer periphery of said piping; and a support cover layer which is a tubular element of a C-shaped cross section having a slit-shaped opening over the total length in the axial direction of the tubular element and covers said heat insulating unit layer from the outside.

2. The heat insulating construction for piping according to claim 1, wherein said heat insulating unit layer further includes a heat generating element portion.

3. The heat insulating construction for piping according to claim 1 or 2, wherein said heat insulating construction further comprises an external cover layer, which is a tubular element of a C-shaped cross section having a slit-shaped opening over the total length in the axial direction of the tubular element and covers said support cover layer to prevent an opening of said support cover layer from being exposed.

4. The heat insulating construction for piping according to claim 3, wherein a heating portion of said heat insulating unit layer has a width capable of substantially covering the outer periphery of said piping in the width direction and has an ear portion consisting of a heat-resistant resin sheet at both ends in the width direction; and said ear portions are held between both end outer peripheral portions forming the opening of the support cover layer and the inside surface of said external cover layer.

5. The heat insulating construction for piping according to any one of claims 1 to 4, wherein said support cover layer and/or external cover layer are formed of an elastic material.

6. The heat insulating construction for piping according to any one of claims 1 to 5, wherein said support cover layer and/or external cover layer consist of PFA resin with a thickness of 0.5 to 5 mm.

7. The heat insulating construction for piping according to any one of claims 1 to 6, wherein said support cover layer and/or external cover layer are constructed so that at least one tube end corner portion of an edge forming the slit-shaped opening is cut.

8. A heat insulating tool kit comprising a band-shaped heat insulating unit in which at least a heat insulating material layer is wrapped with a heat-resistant resin film and is wound in the width direction at the outer periphery of said piping; and a support cover which is a tubular element of a C-shaped cross section having a slit-shaped opening over the total length in the axial direction of the tubular element and covers said heat insulating unit from the outside.

9. The heat insulating tool kit according to claim 8, wherein said heat insulating unit further includes a heat generating element portion.

10. The heat insulating tool kit according to claim 8 or 9, wherein a heating portion of said heat insulating unit has a width capable of substantially covering the outer periphery of a piping in the width direction and has an ear portion consisting of a heat-resistant resin sheet at both ends in the width direction; and when said heat insulating unit is wound on the outer peripheral surface of tubular element and the support cover is mounted so as to wrap the outer peripheral surface, said ear portion has a size such as to project from an edge forming the slit-shaped opening of the support cover.

11. The heat insulating tool kit according to any one of claims 8 to 10, wherein said support cover and/or external cover are formed of an elastic material.

12. The heat insulating tool kit according to any one of claims 8 to 11, wherein said support cover and/or external cover consist of PFA resin with a thickness of 0.5 to 5 mm.

13. The heat insulating tool kit according to any one of claims 8 to 12, wherein said support cover and/or external cover are constructed so that at least one tube end corner portion of an edge forming the slit-shaped opening is cut.
